Europäisches Patentamt

European Patent Office

Office européen des brevets

(19)

(11) Veröffentlichungsnummer: **0 160 277**
**B1**

(12) **EUROPÄISCHE PATENTSCHRIFT**

(45) Veröffentlichungstag der Patentschrift: 29.08.90

(21) Anmeldenummer: 85105078.1

(22) Anmeldetag: 26.04.85

(51) Int. Cl.⁵: **F 16 F 9/08,** F 16 F 9/49,
B 60 G 17/04

(54) Pneumatische Feder- Dämpfer-Einheit.

(30) Priorität: 30.04.84 DE 8413300 u

(43) Veröffentlichungstag der Anmeldung:
06.11.85 Patentblatt 85/45

(45) Bekanntmachung des Hinweises auf die
Patenterteilung:
29.08.90 Patentblatt 90/35

(84) Benannte Vertragsstaaten:
DE FR GB IT SE

(56) Entgegenhaltungen:
US-A-2 592 391
US-A-3 000 625
US-A-3 372 919
US-A-3 666 287
US-A-4 386 791

(73) Patentinhaber: Gold, Henning, Prof. Dr.-Ing.
Im Rheinblick 24
D-6530 Bingen 1 (DE)

(72) Erfinder: Gold, Henning, Prof. Dr.-Ing.
Im Rheinblick 24
D-6530 Bingen 1 (DE)

(74) Vertreter: Freischem, Werner, Dipl.-Ing.
Patentanwälte Dipl.-Ing. W. Freischem Dipl.-Ing.
I. Freischem An Gross St. Martin 2
D-5000 Köln 1 (DE)

Courier Press, Leamington Spa, England.

# Beschreibung

Die Erfindung geht aus von einer pneumatischen Feder-Dämpfer-Einheit gemäß dem Oberbegriff des Patentanspruches 1.

Eine pneumatische Feder-Dämpfer-Einheit dieser Art ist bekannt aus der beim Institut für Kraftfahrwesen und Kolbenmaschinen der rheinisch-westphählischen technischen Hochschule Aachen vorliegenden Dissertationsschrift des Anmelders.

Diese Feder-Dämpfer-Einheit federt und dämpft ausschließlich mit Luft. Ihre Mittellage wird durch Nachfüllen oder Ablassen von Luft über den Entlüftungskanal konstant gehalten. Der Entlüftungskanal ist dabei über einen Niveauschalter gesteuert. Dabei passen sich Ihre Feder- und Dämpfungseigenschaften selbsttätig an die jeweilige Last an, so daß diese Feder-Dämpfer-Einheit insbesondere für Fahrzeuge mit wechselnder Last geeignet ist und einen von der Zuladung unabhängigen Federungskomfort gewährleistet. Diese Feder-Dämpfer-Einheit hat ein frequenzselektives Dämpfungsverhalten und ermöglicht eine starke Dämpfung einer Resonanzschwingung, ohne bei überkritischer Anregung große Dämpferkräfte zu erzeugen.

Durch die US—A 30 00 625 ist es bekannt, bei der pneumatischen Feder in Verbindung mit einem hydraulischen Teleskopstoßdämpfer mehrere Federraten bzw. Federsteifigkeiten vorzusehen, in dem über zwei mit dem Kolben der Federeinheit betätigte Ventilscheiben das Volumen der Gasfeder verändert wird. Dies bewirkt zudem eine Abdämpfung der Endanschläge durch eine entsprechende Verkleinerung des Kompressions- bzw. Expansionsraumes der Gasfeder.

Im Zusammenhang mit Luftfedern in Verbindung mit Niveauregelventilen ist es ferner bekannt, in Abhängigkeit von der Bewegung des Dämpferkolbens Ventile des Niveauregelsystems zu öffnen oder zu schließen, um eine Druckanhebung oder Druckabsenkung in der Gasfeder zu bewirken (vgl. z.B. US—A 33 72 919 oder US—A 36 66 287).

Der Erfindung liegt die Aufgabe zugrunde, die pneumatische Feder-Dämpfer-Einheit der gattungsgemäßen Art derart weiterzuentwickeln, daß sie eine baulich einfache Konstruktion aufweist und eine funktionell günstige Niveauregelung ermöglicht, wobei der von dem Niveauschalter gesteuerte Druck im Gehäuse auch bei völliger Entlastung der Einheit teilweise erhalten bleiben soll.

Diese Aufgabe wird erfindungsgemäß mit den kennzeichnenden Merkmalen des Patentanspruches 1 gelöst. Vorteilhafte und zweckmäßige Weiterbildungen der Erfindung sind den Patentansprüchen 2 bis 10 entnehmbar.

Durch die erfindungsgemäße Maßnahme wird erreicht, daß bei dem Kraftfahrzeug bei völlig entlasteten Rädern, beispielsweise wenn das Fahrzeug von einer Hebebühne aufgenommen ist, trotz der vom Niveauschalter ausgehenden Steuerimpulse die Feder-Dämpfer-Einheit nicht drucklos wird. Das Verschließen des Entlüftungskanales wird dabei in besonders einfacher Weise unmittelbar durch den Kolben bzw. ein mit dem Kolben zusammenwirkendes Element bewerkstelligt.

Besonders vorteilhaft ist auch, daß die Niveauschalter zur Steuerung des Luftdrucks innerhalb der pneumatischen Feder-Dämpfer-Einheit zweckmäßigerweise auf der Mantelfläche der Abwälzhülse angebracht sind und unmittelbar vom sich abwälzenden Rollbalg betätigt werden.

In der folgenden Beschreibung werden Ausführungsbeispiele der erfindungsgemäßen pneumatischen Feder-Dämpfer-Einheit unter Bezugnahme auf die Zeichnungen näher beschrieben. Die Zeichnungen zeigen in:

Fig. 1 eine Längsschnittansicht einer Feder-Dämpfer-Einheit nach der Erfindung,

Fig. 2 einen vergrößerten Ausschnitt II aus Fig. 1,

Fig. 3 einen vergrößerten Ausschnitt III aus Fig. 1,

Fig. 4 eine Ansicht gemäß Fig. 2 einer anderen Ausführungsform der Luftzuführung,

Fig. 5 eine vergrößerte Schnittansicht eines Niveauschalters,

Fig. 6 eine Draufsicht des Niveauschalters und

Fig. 7 eine Längsschnittansicht einer weiteren erfindungsgemäßen Feder-Dämpfer-Einheit.

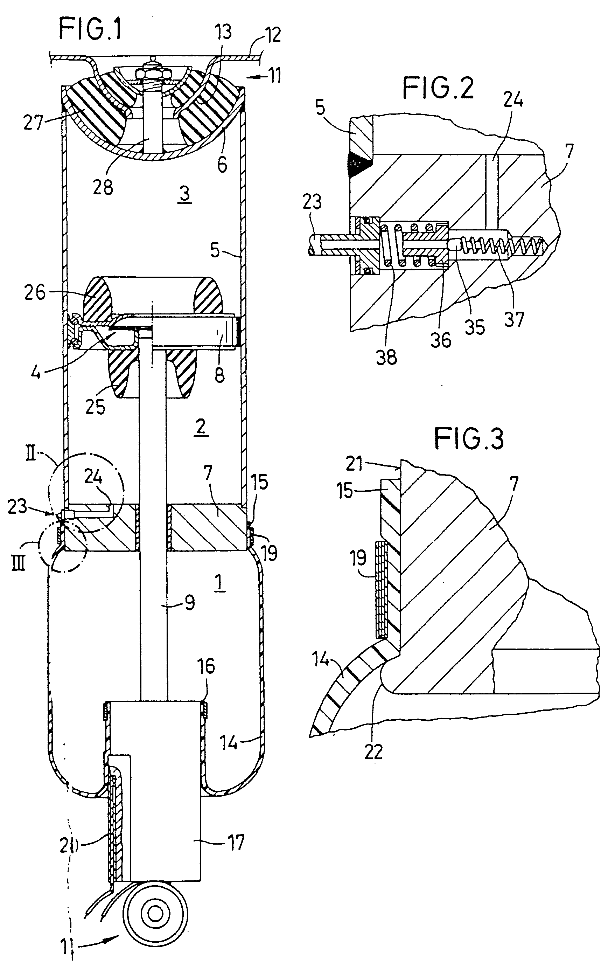

Die aus Fig. 1 ersichtliche Gas-Feder-Dämpfer-Einheit weist einen Federraum 1 und zwei Dämpferräume 2 und 3 auf. Beim Einfedern verringert sich das Volumen des Federraumes 1 und des Dämpferraumes 3, während das Volumen des Dämpferraumes 2 sich beim Einfedern vergrößert und beim Ausfedern verkleinert. Der Federraum 1 ist innerhalb eines Federbalges 14 untergebracht, während die Dämpferräume 2 und 3 in einem zylindrischen Gehäuse 5 untergebracht und durch einen im Gehäuse 5 verschiebbaren Kolben 8 voneinander getrennt sind. Das Gehäuse 5 ist an einem Ende durch eine Decke 6 und am anderen Ende durch einen Boden 7 abgeschlossen. Der Boden 7 trennt den Federraum 1 vom Dämpferraum 2. Im Kolben 8 ist ein Drosselorgan 4 angeordnet, über das der Dämpferraum 2 mit dem Dämpferraum 3 in Verbindung steht. Der Kolben 8 weist eine Kolbenstange 9 auf, die sich durch den Dämpferraum 2, den Boden 7 des Gehäuses 5 und den Federraum 1 erstreckt und dessen Ende in eine Abwälzhülse 17 für den Federbalg 14 übergeht. Am äußeren Ende der Abwälzhülse 17 ist ein Anlenkpunkt 10 der Gas-Feder-Dämpfer-Einheit angeordnet, während der andere Anlenkpunkt 11 der Feder-Dämpfer-Einheit sich im Bereich der Decke 6 des Gehäuses 5 befindet.

Die Feder-Dämpfer-Einheit ist beispielsweise mit ihrem oberen Anlenkpunkt 11 an einem Teil 13 der Karosserie 12 und mit ihrem unteren Anlenkpunkt 10 an einer Radachse angelenkt.

Im Boden 7 kann ein von außen zuschaltbares Drosselorgan angeordnet sein, das den Federraum 1 mit dem Dämpferraum 2 verbindet, mit der Wirkung, daß die Federcharakteristik und die Dämpfercharakteristik verändert werden. Ferner kann der Dämpferraum 3 über eine hohle Kolbenstange 9 und die Abwälzhülse 17 mit dem Federraum 1 verbunden sein. Diese Verbindung kann gedrosselt oder ungedrosselt sein und von außen zuschaltbar sein.

Der Federbalg 14 ist mit seinem im Durchmesser größeren Ende 15 mittels eines Spannbandes 19 am Umfang des Bodens 7 des Gehäuses 5 befestigt, während das im Durchmesser kleinere Ende 16 am oberen Ende der Abwälzhülse 17 befestigt ist. Beim Einfedern wälzt sich der Federbalg 14 auf dieser Abwälzhülse 17 ab.

Auf der Abwälzhülse 17 ist ein Niveauschalter 20 angebracht, der dafür sorgt, daß der Gasdruck in der Feder-Dämpfer-Einheit der abzufedernden Last angepaßt ist.

Wie die Fig. 3 zeigt, ist der Federbalg 14 mit seinem im Durchmesser größeren Ende 15 auf einer Spannfläche 21 am Umfang des Bodens 7 luftdicht befestigt. Die Spannfläche 21 ist leicht konisch und hat am unteren, im Durchmesser größeren Ende einen Wulst 22, der das Abrutschen des Federbalges 14 zuverlässig verhindert. Der Federbalg 14 wird bei der Montage mit seinem Ende 15 so weit oberhalb des Wulstes 22 hochgezogen und mit einem Spannband 19, insbesondere einem armierten Klebeband, stramm umwickelt, daß der untere Rand des Spannbandes 19 einen Abstand vom Wulst 22 hat. Unter Last kann der obere Rand 15 des Federbalges 14 auf der konischen Spannfläche 21 zum größeren Durchmesser hinrutschen, so daß die dichtende Vorspannung im Spannband 19 wächst und eine zuverlässige Abdichtung gewährleistet ist.

Auf der Oberseite des Kolbens 8 ist ein elastischer ringförmiger Endanschlag 26 angebracht, der beim maximalen Einfedern gegen die nach innen gewölbte Decke 6 des Gehäuses 5 stößt.

Über eine von einer Pumpe oder einem Druckspeicher kommende Gas- oder Luftzuführung 23, die am Boden 7 des Gehäuses 5 angeschlossen ist und die in den Dämpferraum 2 einmündet, kann der Druck in der Feder-Dämpfer-Einheit verändert werden. Die Einmündung 24 der Luftzuführung 23 in den Dämpferraum 2 ist so angeordnet, daß sie im ausgefederten Zustand durch einen elastischen Endanschlag 25, der an der Unterseite des Kolbens 8 befestigt ist, verschlossen wird. Die Lage der Einmündung 24 und die Form des Endanschlages 25 sind so gewählt, daß bei allen vorkommenden Entlastungszuständen ein Ablassen von Druckluft möglich bleibt, während bei völliger Entlastung, z.B. beim Reifenwechsel oder dergleichen, kein Ablassen von Druckluft erfolgen soll.

Bei der erfindungsgemäßen Feder-Dämpfer-Einheit sind die Federkräfte und die Dämpferkräfte nicht voneinander trennbar. Diese Einheit ist stets mit einer Federkraft vorgespannt eingebaut. Um eine gute Schallisolierung zwischen der Feder-Dämpfer-Einheit und der abzufedernden Masse zu erreichen, ist der Anlenkpunkt 11 als weiches, großflächiges Polster ausgebildet. Das Chassis bzw. die Karosserie stützt sich über eine halbkugelartige Ausformung 13 auf einem Polsterring 27 ab.

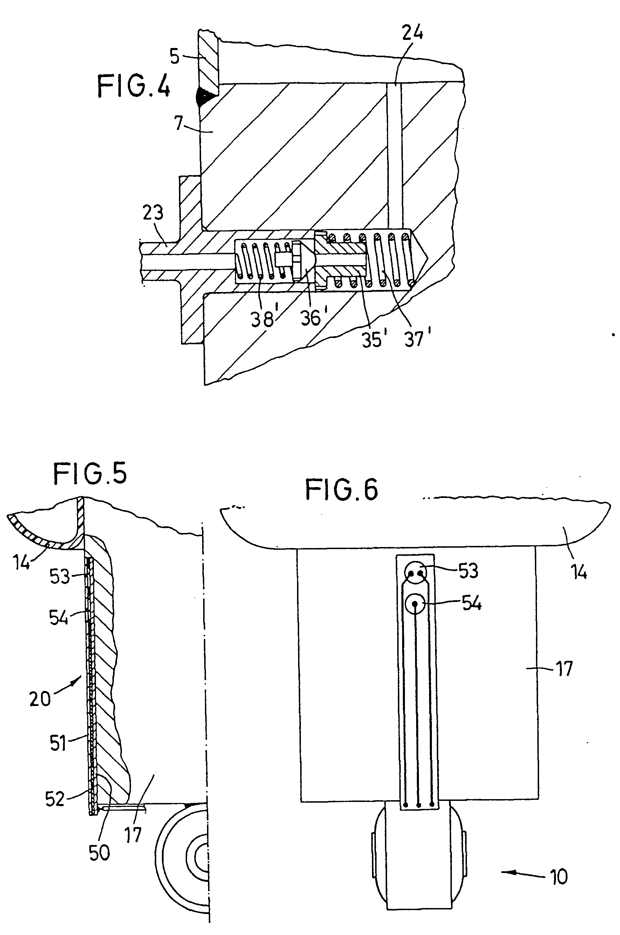

Damit auch bei Feder-Dämpfer-Einheiten mit geringem Hub und großer Zuladung des Entlüften bei den verschiedenen Entladungszuständen möglich ist, sind—wie aus Fig. 2 und 4 ersichtlich ist—zwischen der Luftzuführung 23 und dem Dämpferraum 2 ein Füllventil 35 und ein Ablaßventil 36 in Reihe angeordnet. Beim Füllen strömt die Luft durch das innere Rückschlagventil 35, deren Rückstellfeder 37 relativ schwach ist.

Beim Ablassen strömt die Luft durch ein Rückschlagventil 36, deren Rückstellfeder 38 relativ stark ist. Das Rückschlagventil 36 ermöglicht ein Abströmen der Luft nur bis zu einem durch die Vorspannung der starken Rückstellfeder 38 bedingten Differenzdruck.

Bei der Ausführungsform nach Fig. 2 hat der Gasdruck im Dämpferraum 2 eine relativ große Angriffsfläche am beweglich geführten Ventilkörper 36, während die Angriffsfläche der zuzuführenden Luft am Schließkörper 35 klein ist. Dementsprechend muß die Rückstellfeder 38 erheblich stärker sein als die Rückstellfeder 37. Bei der Ausführungsform nach Fig. 4 ist die Ventilanordnung so getroffen, daß die Angriffsfläche des im Dämpferraum 2 herrschenden Gasdrucks am Schließkörper 36' klein ist, während die Angriffsfläche der zuzuführenden Luft am beweglichen Ventilkörper 35' relativ groß ist. Deshalb können die Rückstellfedern 37', 38' im wesentlichen etwa gleich stark ausgebildet sein.

Der Niveauschalter 20 ist auf der Abwälzhülse 17 angebracht und wird unmittelbar vom Federbalg 14 betätigt. Liegt der Federbalg 14 im Bereich des Schaltpunktes an der Abwälzhülse 17 an, so wird durchgeschaltet. Diese Information sagt einer Regelelektronik, ob das Niveau zu hoch (Schaltzustand 0) oder zu niedrig (Schaltzustand 1) ist. Liegt diese Information von beiden Rädern einer Achse vor, so ist folgende Schaltlogik möglich:

| | Schaltstellung | |
| Regelfunktion | links | rechts |
|---|---|---|
| Luft einfüllen | 1 | 1 |
| — | 1 | 0 |
| — | 0 | 1 |
| Luft ablassen | 0 | 0 |

Diese Schaltlogik ist auch durch zwei untereinander angeordnete Schaltpunkte an der Abwälzhülse 17 möglich. Auf der elektrisch leitenden Abwälzhülse 17 oder auf einer darauf aufgeklebten Schaltleiste 50 oder einer Leiterplatte mit aufgedruckten Leitern wird eine isolierende Folie 52 aufgebracht, in die mindestens ein Fenster 53 gestanzt ist. Darüber wird eine leitende Schaltzunge 51 aus Werkstoff mit hoher Biegewechselfestigkeit so geklebt, daß sie gegenüber der Abwälzhülse 17 isoliert ist. Diese Schaltzunge 51 ist großflächig mit einem schützenden Abdeckband, z.B. aus Polyuretan, überklebt. Drückt der Federbalg 14 im Bereich des eingestanzten Fensters 53 auf die Schaltzunge 51, so wird sie gegenüber der Abwälzhülse 17 bzw. gegenüber der Schaltleiste 51 leitend, so daß eine Schaltung erfolgt, die das Einfüllen von Luft veranlaßt. Durch mehrere Fenster 53,54 untereinander lassen sich verschiedene Schaltungen bei unterschiedlichen Niveaus erzeugen. Zum Erzielen geringer Schaltpunktabstände können die untereinander angeordneten Fenster 53,54 usw. seitlich versetzt angeordnet werden.

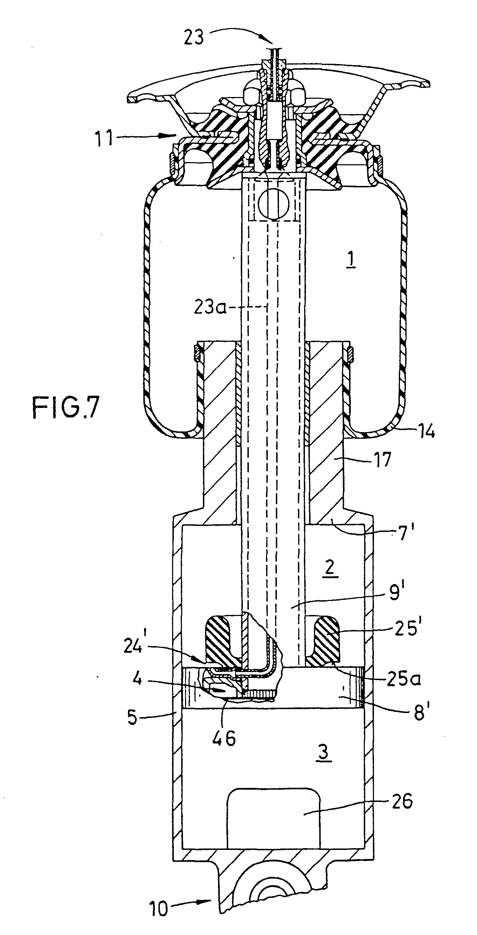

Die Feder-Dämpfer-Einheit gemäß Fig. 7 ist im wesentlichen gleich aufgebaut und ist insoweit nicht nochmals beschrieben. Funktionsgemäß gleiche Teile sind mit gleichen Bezugszeichen versehen. Die Einbaulage der Einheit ist umgekehrt, d.h. der Federraum 1 ist oben und der Rollbalg 14 an der Karosserie des Kraftfahrzeuges abgestützt.

Durch die hohle Kolbenstange 9' ist ein Rohrabschnitt 23a verlegt, welcher die Luftzuführung 23 zu dem Dämpferraum 2 bildet. Der Rohrabschnitt 23a kommuniziert mit einem weiteren, L-förmig gebogenen Rohrabschnitt 24a, welcher als Entlüftungskanal 24' fest in dem Kolben 8' verlegt ist.

Am Kolben 8' ist ferner ein ringförmiger Endanschlag 25' festgelegt, welcher zugleich die Mündung des Entlüftungskanals 24' im Dämpferraum 2 steuert. Legt sich der gummielastische Endanschlag 25' beim Ausfedern der Einheit am Boden 7' an, so wird dessen zurückgesetzter, die Mündungsstelle überragender Stirnwandbereich 25a auf die Mündungsstelle gepreßt und verschließt diese. Eine weitere Entleerung der Feder-Dämpfer-Einheit ist dadurch unterbunden.

**Patentansprüche**

1. Pneumatische Feder-Dämpfer-Einheit mit einem von einer Decke (6) und von einem Boden (7) abgeschlossen zylindrischen Gehäuse (5), das mit einem ersten Anschluß (11) versehen ist, einem in diesem Gehäuse (5) verschiebbar geführten Kolben (8), der das Gehäuse (5) in einen beim Einfedern größer werdenden gas- oder luftgefüllten Dämpferraum (2) und einen beim Einfedern kleiner werdenden gas- oder luftgefüllten Dämpferraum (3) unterteilt, einem in Kolben (8) angeordneten, in zwei Richtungen durchströmbaren Drosselorgan (4), einer im Kolben (8) starr befestigten und durch den Boden (7) des Gehäuses (5) und durch einen Federraum (1) geführten Kolbenstange (9), an deren Ende ein zweiter Anschluß (10) angeordnet ist, einem zwischen dem Gehäuse (5) und einem mit der Kolbenstange (9) verbundenen Teil angeordneten Rollbalg (14), der den beim Einfedern kleiner werdenden Federraum (1) abdichtet und einem aus dem Gehäuse (5) führenden, abschließbaren Entlüftungskanal (24), der über einen Niveauschalter (20) gesteuert ist, dadurch gekennzeichnet, daß der Entlüftungskanal in den beim Ausfedern kleiner werdenden Dämpferraum (2) mündet und derart angeordnet ist, daß er in ausgefedertem Zustand der Einheit durch den Kolben (8) bzw. ein mit dem Kolben zusammenwirkendes Element (Endanschlag 25) verschlossen ist.

2. Pneumatische Feder-Dämpfer-Einheit nach Anspruch 1, dadurch gekennzeichnet, daß das Element ein ringförmiger Endanschlag (25) ist, welcher im ausgefederten Zustand zwischen Kolben (8) und Gehäuse bzw. Boden (7) eingespannt ist und den Entlüftungskanal abdichtend überdeckt.

3. Feder-Dämpfer-Einheit nach den Ansprüchen 1 und 2, dadurch gekennzeichnet, daß der Entlüftungskanal (24) im Boden (7) des Gehäuses (5) angeordnet ist.

4. Feder-Dämpfer-Einheit nach den Ansprüchen 1 und 2, dadurch gekennzeichnet, daß der Entlüftungskanal (24) im Kolben (8) ausgebildet ist und mit einer in der Kolbenstange ausgebildeten Luftzuführung (23') kommuniziert.

5. Feder-Dämpfer-Einheit nach Anspruch 4, dadurch gekennzeichnet, daß der Entlüftungskanal (24) und die Luftzuführung (23) durch innerhalb des Kolbens (8) und der Kolbenstange (9) verlegte Rohrabschnitte (24a, 23a) gebildet sind.

6. Feder-Dämpfer-Einheit nach den Ansprüchen 1 bis 5, dadurch gekennzeichnet, daß zu beiden Seiten des Kolbens (8) ringförmige Endanschläge (25, 26) aus gummielastischem Material angeordnet sind.

7. Feder-Dämpfer-Einheit nach einem der vorhergehenden Ansprüche, dadurch gekennzeichnet, daß der beim Einfedern größer werdende Dämpferraum (2) an eine Luftzuführung (23) angeschlossen ist und zwischen dieser Luftzuführung (23) und dem Dämpferraum (2) ein selbsttätig öffnendes Einlaßventil (35, 35') angeordnet ist.

8. Feder-Dämpfer-Einheit nach einem oder mehreren der vorhergehenden Ansprüche, dadurch gekennzeichnet, daß der Entlüftungskanal (24) und die Luftzuführung (23) von einem gemeinsamen Kanal gebildet sind, in dem hintereinander ein selbsttätig öffnendes Ablaßventil (36, 36') und ein selbsttätig öffnendes Einlaßventil (35, 35') angeordnet sind.

9. Feder-Dämpfer-Einheit nach einem der Ansprüche 1 bis 8, dadurch gekennzeichnet, daß der Rollbalg (14) mit seinem im Durchmesser kleineren Ende (16) an einer Abwälzhülse (17) luftdicht befestigt ist, auf deren Mantelfläche mindestens ein vom sich abwälzenden Rollbalg (14) betätigter Schalter (20) angeordnet ist.

10. Feder-Dämpfer-Einheit nach Anspruch 9, dadurch gekennzeichnet, daß der Niveauschalter (20) sich zusammensetzt aus einer elektrisch leitenden Schaltleiste (50) und einer isolierenden Folie (52) mit mindestens einem Fenster (53, 54) und einer elektrisch leitenden Schaltzunge (51), die vom Rollbalg (14) durch das Fenster (53, 54) gegen die Schaltleiste (50) drückbar ist.

**Revendications**

1. Une unité pneumatique d'amortissement élastique, avec un boîtier cylindrique (5) fermé par un couvercle (6) et un fond (7) et pourvu d'une première connexion (11), un piston (8) guidé à coulissement dans ce boîtier (5), séparant ledit boîtier (5) en une chambre d'amortissement (2) remplie de gaz ou d'air qui devient plus grande en compression et une chambre d'amortissement (3) remplie de gaz ou d'air qui devient plus petite en compression, un organe étrangleur (4) agencé dans le piston (8) et susceptible d'être traversé par un flux dans deux directions, une tige de piston (9) fixée rigidement au piston et guidée à travers le fond (7) du boîtier (5) et une chambre d'élasticité (1), à l'extrémité de laquelle est agencée une deuxième connexion (10), un soufflet roulant (14) disposé entre le boîtier (5) et une pièce (17) reliée à la tige de piston (9) et qui scelle la chambre d'elasticité (1) qui devient plus petite en compression, et un canal d'évent (24) obturable menant hors du boîtier (5) et commandé par un commutateur de niveau (20), caractérisée en ce que le canal d'évent débouche dans la chambre d'amortissement (2) qui devient plus petite en détente, et en ce qu'il est agencé de manière à être fermé par le piston (8), respectivement un élément coopérant avec le piston (butée de fin de course 25), quand l'unité est en étant de détente.

2. Unité pneumatique d'amortissement élastique selon la revendication 1, caractérisée en ce que l'élément est une butée de fin de course (25) annulaire qui, en état de détente, est pincée entre le piston (8) et le boîtier, respectivement le fond (7), et recouvre de façon étanche de canal d'évent.

3. Unité d'amortissement élastique selon les revendications 1 et 2, caractérisée en ce que le canal d'évent (24) est agencé dans le fond (7) du boîtier (5).

4. Unité d'amortissement élastique selon les revendications 1 et 2, caractérisée en ce que le canal d'évent (24) est formé dans le piston (8) et communique avec une entrée d'air (23') formée dans la tige de piston.

5. Unité d'amortissement élastique selon la revendication 4, caractérisée en ce que le canal d'évent (24) et l'entrée d'air (23) sont formés par des sections tubulaires (24a, 23a), montées dans le piston (8) et la tige de piston (9).

6. Unité d'amortissement élastique selon les revendications 1 à 5, caractérisée en ce que des butées de fin de course annulaires (25, 26) en matériau caoutchouté élastique sont agencées de part et d'autre du piston (8).

7. Unité d'amortissement élastique selon l'une des revendications précédentes, caractérisée en ce que la chambre d'amortissement (2) qui devient plus grande en compression est reliée à une entrée d'air (23), et en ce qu'une soupape d'entrée (35, 35') à ouverture automatique est agencée entre cette entrée d'air (23) et la chambre d'amortissement (2).

8. Unité d'amortissement élastique selon l'une ou plusieurs des revendications précédentes, caractérisée en ce que le canal d'évent (24) et l'entrée d'air (23) sont formés par un canal commun dans lequel sont disposées l'une derrière l'autre une soupape de sortie à ouverture automatique (36, 36') et une soupape d'entrée à ouverture automatique (35, 35').

9. Unité d'amortissement élastique selon l'une des revendications 1 à 8, caractérisée en ce que le soufflet roulant (14) est fixé étanche par sa plus petite extrémité radiale à une douille de déroulement (17) sur le manteau de laquelle est agencé au moins un commutateur (20) actionné par le soufflet roulant (14) se déroulant.

10. Unité d'amortissement élastique selon la revendication 9, caractérisée en ce que le commutateur de niveau (20) se compose d'une barrette de commutation (50) conductrice d'électricité et d'une feuille isolante (52) pourvue d'au moins une fenêtre (53, 54) et d'une languette de commutation (51) conductrice d'électricité susceptible d'être pressée par le soufflet roulant (14) à travers la fenêtre (53, 54) contre la barrette de commutation (50).

**Claims**

1. A pneumatic spring-loaded damping or shock absorbing apparatus with a cylindrical housing (5) which is closed by a top closure (6) and a bottom closure (7) and is provided with a first mounting bracket (11), a piston (8) slidably supported within said housing (5) dividing the housing (5) into an absorption chamber (2) filled with gas or air the volume of which increases upon compression and into an absorption chamber (3) filled with gas or air the volume of which reduces upon compression, a throttle means (4) positioned within the piston (8) for flow of pressure in two directions, a piston rod (9) rigidly affixed in the piston (8) and guided through the bottom (7) of the housing (5) and through a resilient chamber (1) and having positioned at one end a second mounting bracket (10), a resilient rolling bellows (14) positioned between the housing (5) and a member connected to the piston rod (9) and sealing the resilient compressible chamber (1) the volume of which reduces upon compression, and a closable venting conduit (24) leading out of the housing (5) and being controlled by a level switch (20), characterized in that the venting conduit leads into the absorption chamber (2), the volume of which reduces upon expansion and is arranged such that it is closed by the piston (8) or by a means (abutment member 25) cooperating with the piston, respectively, when the apparatus is in the expanded state.

2. A pneumatic spring-loaded damping or shock absorbing apparatus according to claim 1, characterized in that the element is an annular abutment (25) which, in expanded state, is clamped between piston (8) and housing or bottom (7), respectively, and seals the venting conduit.

3. A pneumatic spring-loaded damping or shock absorbing apparatus according to claims 1 and 2, characterized in that the venting channel (24) is positioned in the bottom (7) of the housing (5).

4. A pneumatic spring-loaded damping or shock absorbing apparatus according to claims 1 and 2, characterized in that the venting conduit (24) is formed in the piston (8) and communicates with an air inlet (23') formed within the piston rod.

5. A pneumatic spring-loaded damping or shock absorbing apparatus according to claim 4, characterized in that the venting conduit (24) and the air intake (23) are formed by tubular sections (24a, 23a) provided within the piston (8) and the piston rod (9).

6. A pneumatic spring-loaded damping or shock absorbing apparatus according to claims 1 to 5, characterized in that at both ends of the piston (8) annular abutment members (25, 26) of elastic material are positioned.

7. A pneumatic spring-loaded damping or shock absorbing apparatus according to any one of the preceding claims, characterized in that the absorption chamber (2), the volume of which is increased upon compression is connected to an air inlet (23) and that between said air inlet (23) and the absorption chamber (2) an automatically opening intake valve (35, 35') is positioned.

8. A pneumatic spring-loaded damping or shock absorbing apparatus according to one or more of the preceding claims, characterized in that the venting conduit (24) and the air intake (23) are formed by a common channel in which an automatically opening exhaust valve (36, 36') and an automatically opening intake valve (35, 35') are positioned in series.

9. A pneumatic spring-loaded damping or shock absorbing apparatus according to any one of claims 1 to 8, characterized in that the resilient rolling bellows (14) is attached at its end (16) having a smaller diameter in an air-tight manner to a sleeve (17) at the casing surface of which at least one switch (20) is positioned actuated by the rolling bellows (14) rolling off said sleeve.

10. A pneumatic spring-loaded damping or shock absorbing apparatus according to claim 9, characterized in that the level switch (20) consists of an electrically conductive switch bar (50) and an insulating foil (52) provided with at least one cutout (53, 54) and an electrically conductive tongue (51) which may be pressed by the resilient rolling bellows (14) through the cutout (53, 54) against the switch bar (50).

# FIG.1

# FIG.2

# FIG.3

FIG.4

FIG.5

FIG.6

FIG.7